Europäisches Patentamt

European Patent Office

Office européen des brevets

(19)

(11) Publication number: **0 051 616**
**B1**

(12)     EUROPEAN  PATENT  SPECIFICATION

(45) Date of publication of patent specification: **09.04.86**

(21) Application number: **81901141.2**

(22) Date of filing: **13.05.81**

(86) International application number:
**PCT/GB81/00087**

(87) International publication number:
**WO 81/03266 26.11.81 Gazette 81/28**

(51) Int. Cl.⁴: **A 41 D 13/00,** B 01 D 39/16,
D 04 H 13/00

(54) **DISPOSABLE SURGICAL FACE MASK AND METHOD OF PRODUCING IT.**

(30) Priority: **14.05.80 GB 8015934**

(43) Date of publication of application:
**19.05.82 Bulletin 82/20**

(45) Publication of the grant of the patent:
**09.04.86 Bulletin 86/15**

(84) Designated Contracting States:
**AT DE FR**

(56) References cited:
**FR-A-2 416 535**
**GB-A-2 014 059**

(73) Proprietor: **SURGIKOS INC.**
**501 George Street**
**New Brunswick New Jersey 08903 (US)**

(72) Inventor: **COATES, David Anthony**
**5, Park Avenue Skipton**
**North Yorkshire BD23 1PN (GB)**
Inventor: **SMITH, Rory James Maxwell**
**"High Dene" Hebden, Nr. Grassington**
**North Yorkshire (GB)**

(74) Representative: **Jones, Alan John et al**
**CARPMAELS & RANSFORD 43 Bloomsbury**
**Square**
**London, WC1A 2RA (GB)**

Courier Press, Leamington Spa, England.

## Description

This invention relates to a disposable surgical face mask, and to a method of producing it.

Disposable surgical face masks are now in common use and comprise a nonwoven fibrous web, e.g. a mat of glass fibers, as the filter medium. Such a filter medium relies upon mechanical action to capture bacteria, and close-packed microfine fibers, e.g. down to 1 micron diameter, are essential for high filtration efficiency.

Such surgical face masks suffer from a number of disadvantages, as discussed at Page 1 lines 57 to 92 of GB—A—1,449,285. The disposable surgical face mask described and claimed in that Specification, comprising a spun-bonded non-woven fabric, has been proposed to meet these disadvantages. However mechanical action, namely an arrangement of filaments of particular diameter defining open areas of relatively small size, is still relied upon to trap bacteria, although it is postulated that the electrostatic charge placed on the filaments during the process of formation thereof could attract and hold bacteria.

The use of electrostatics in air filtration has been known for many years. Indeed there are on the market air filters comprising fibrillated polypropylene fibers which are permanently electrically charged. Such fibers are known as "electret" fibers, and trap particles by means of electrostatic attraction. Electret filters are highly efficient and are described, for example, in the Paper entitled "Non-woven electret fibre: a new filtering medium of high efficiency" by J. van Turnhout et al appearing in Inst. Phy. Conf. Ser. No. 48, Page 337, published by the Institute of Physics. Although this Paper suggests the industrial use of fibrillated electret filters, e.g. in industrial face masks, there has not been to our knowledge any suggestion of their use in disposable surgical face masks. Indeed by virtue of their weight, in excess of about 150 g/m², which along with needle punching, is necessary to maintain their integrity, the commercially available electret filters are far too bulky, heavy, and unconformable to be used in disposable surgical face masks. US—A—4,178,157 issued December 11, 1979 to J. van Turnhout et al. discloses electret filters of crimped fibres for, inter alia, face masks, said electret filters having a weight of 250 g/m².

GB—A—2,014,059 A discloses a filtering face piece dust respirator consisting of a cup of multilayer material comprising a filtering layer sandwiched between porous supporting layers. The filtering layer comprises widely spaced fibres of a dielectric, e.g. electret, material such as polypropylene, whereby the filtering action is not a mechanical action but is due to an electric charge formed on the dielectric material.

GB—A—2,015,253 A discloses respirators, especially cup-like face masks, incorporating as the filter medium a fibrous web electret comprising melt blown fibres rather than fibrillated fibres. The fibrillation method for producing electret filters is criticised as time-consuming, expensive, and achieving limited fibre size. The melt blown fibres are of an average diameter less than 25 micrometers down to one micrometer in diameter. However, fears are being voiced nowadays that fibres up to 5 micrometers in diameter may be respirable and damaging to the lungs, e.g. in a document entitled "Man-made Mineral Fibres" published in 1979 by the Health and Safety Commission (Reference No. ISBM 01188325147).

Our copending European patent application No. 81901140.4 relates to the use of fibrillated electret fibres in items of apparel.

The present invention provides a disposable surgical face mask comprising, as the filter medium, a web, preferably an unbonded web, comprising fibrillated electret fibres, said web having a weight from 6 to 50 g/m², and said fibres having an average width of at least 10 micrometers.

Such a disposable surgical face mask has high bacterial filtration efficiency, is conformable to the face, pliable, and comfortable to wear because of its low weight and very low air resistance. Moreover, the fibrillated fibres are interconnected which not only impedes release of a fibre from the web, but because of their size are much less easily respired than microfine fibres. Moreover the mask is simply an inexpensively manufactured.

The web constituting the filter medium may include or consist of said fibrillated electret fibres. Preferably said web has a weight from 20 to 35 g/m², e.g. about 25 g/m². The fibrillated fibers are substantially rectangular in section and may for example have a depth of about 10 micrometers and an average width of about 40 micrometers, individual fibers having a width varying from at least 10 micrometers to about 100 micrometers.

Preferably the fibrillated fibers are of polypropylene but other fibrillated fibers which can be electrically charged and retain such charge can be used. The fibers may be electrically charged before or after fibrillation.

The face mask includes a body portion adapted to cover the nose and mouth, and means for securing the body portion over the nose and mouth. The body portion may be constituted by said filter medium but preferably it includes support means for the filter medium, especially when the filter medium consists of unbonded fibers, e.g. the web may be laminated to maintain its integrity. The filter medium is sufficiently pliable for it to be pleated, and in a preferred disposable surgical face mask according to the present invention the body portion includes one or more pleats.

In one embodiment of the present invention the web consists of unbonded electret fibers and is supported by, and retained between, webs of highly porous lightweight fabric, preferably nonwoven fabric. Such a fabric offers very little resistance to the flow of air through the mask, does not reduce the conformability of the mask, and is easily pleated.

In another embodiment of the present invention, the electret fibers may be present in the web along with other textile fibers, particularly when the body portion is constituted by the filter medium, i.e. the filter medium is self-supported. Preferably said electret fibers comprise 5 to 50% by weight of the web when the web is self-supported. Suitable textile fibers include natural and/or man-made fibers, e.g. cellulosic fibers such as viscose rayon fibers or cotton fibers. Synthetic fibers such as nylon, polyester or polypropylene fibers may be used. Said textile fibers may be heat-sealable to facilitate make-up of the disposable surgical face mask, e.g. sheath-core fibers having a polypropylene core and a polyethylene sheath. Such fibers can also be electrically charged to produce electret fibers.

Preferably the web comprising the electret fibers is air-laid. Alternatively the web may be dry-laid, as by carding, if desired. The web may be unbonded when supported in the face mask as described above, but, especially when it is not supported in the face mask, it may be stabilised by printing with a binder and/or by rearrangement, entanglement, or "bundling" with fluid streams, e.g. in accordance with the process described in British Patent Specifications Nos. 816,673, 836,396 and 836,397.

In the "bundling" process, it is preferred to use high pressure, e.g. about 110,316 kPa (16,000 lbs/sq. in.), low diameter fluid streams so that the apertures produced in the web are of 25 micrometers diameter or less, that is to say, within the size range of the gaps between the individual electret fibers.

The binder, when used, may be applied to the unbonded web by, for example, a rotogravure print roller. Reference is also made to Figure 5 of GB—A—742,089 for suitable apparatus for carrying out the bonding step. The binder is preferably distributed uniformly throughout the web, i.e. continuously or in regularly spaced areas. A suitable binder is, for example, an acrylic binder as is well known in the art.

The present invention further provides a method of producing a disposable surgical face mask including the steps of laying one or more webs comprising fibrillated electret fibers or fibrillated electret-precursor fibers, having a weight or combined weight from 6 to 50 g/m² and the fibrillated fibers having an average width of at least 10 micrometers, on a first web of fabric, preferably nonwoven fabric, and laying a second web of fabric, preferably nonwoven fabric, on said one or more webs of fibrillated fibers, and processing the laminate formed into said mask. When fibrillated electret-precursor fibers are used, they are electrically charged after formation of the laminate.

Preferably the method is a continuous one, and masks are produced continuously by cutting said laminate into lengths each suitable as the body portion of a mask.

In one embodiment of the method of the present invention, a commercially available needle-punched web of fibrillated electret fibers may be used as a starting material. A web of fibrillated electret fibers produced in the manner described in GB—A—1,469,740 may be cut into lengths, air-laid, and needle-punched to provide the web of starting material.

Such a web has a weight considerably in excess of 50 g/m², e.g. 150 g/m² or more. A web having a weight from 6 to 50 g/m² may be reconstituted from the heavier-weight precursor web using the method and/or apparatus described in GB—A—1,375,584 and GB—A—1,375,585.

The web of desired weight is laid onto a web of fabric, preferably nonwoven fabric, forming one of the support layers of the face mask. Another support layer of fabric, preferably nonwoven fabric, is laid onto the electret filter web, and the laminate formed is processed into a disposable surgical face mask in known manner.

Instead of winding the fibrillated fibers directly onto a roller as in the aforementioned GB—A—1,469,740, the fibrillated fibers leaving the fibrillator are, in another embodiment of the method of the present invention, chopped into about 5 cm. lengths, and carded into a web in which the fibers extend longitudinally thereof. The carded web is doffed without coming into contact with metal and laid onto a web of fabric, preferably nonwoven fabric, forming one of the support layers of the mask. If desired, one or more carded webs may be deposited from other carding engines onto the first carded web to produce a web of desired thickness and weight. For example, four carding engines may be employed each to produce a web weighing about 6 g/m² which, superimposed, produce an overall web weighing about 24 g/m². Another support layer of fabric, preferably nonwoven fabric, is laid onto the carded web and the laminate formed is processed into a disposable surgical face mask in known manner.

In yet another embodiment of the method of the present invention the web of fibrillated film is not chopped and carded, but is spread out immediately after leaving the fibrillator with the fibers extending substantially longitudinally of the web. The web is laid onto a web of fabric, preferably nonwoven fabric, forming one of the support layers of the mask. Two or more such fibrillated webs may be superimposed to form an electret filter web of desired thickness and weight. Another support layer of fabric, preferably nonwoven fabric, is laid onto the fibrillated fiber web, and the laminate formed is processed into a disposable surgical face mask in known manner. In this method, the fibrillated electret fibers are continuous, i.e. they stretch from side edge to side edge of the mask.

Some preferred embodiments in accordance with the present invention will now be described, by way of example, with reference to the accompanying diagrammatic Drawings in which:—

Figure 1 is an isometric view of one mask of the present invention as it appears in use;

Figure 2 is a plan view of the body portion of the mask;

Figure 3 is a schematic section on line 3—3 of Figure 2;

Figure 4 is an enlarged section on line 4—4 of Figure 2;

Figure 5 is a plan view of an alternative mask of the present invention;

Figure 6 is a section on line 6—6 of Figure 5;

Figure 7 is a section on line 7—7 of Figure 5;

Figure 8 is a flow diagram of one method of producing the mask; and

Figure 9 is a side elevation of apparatus for producing a three-ply laminate used in the method of Figure 8.

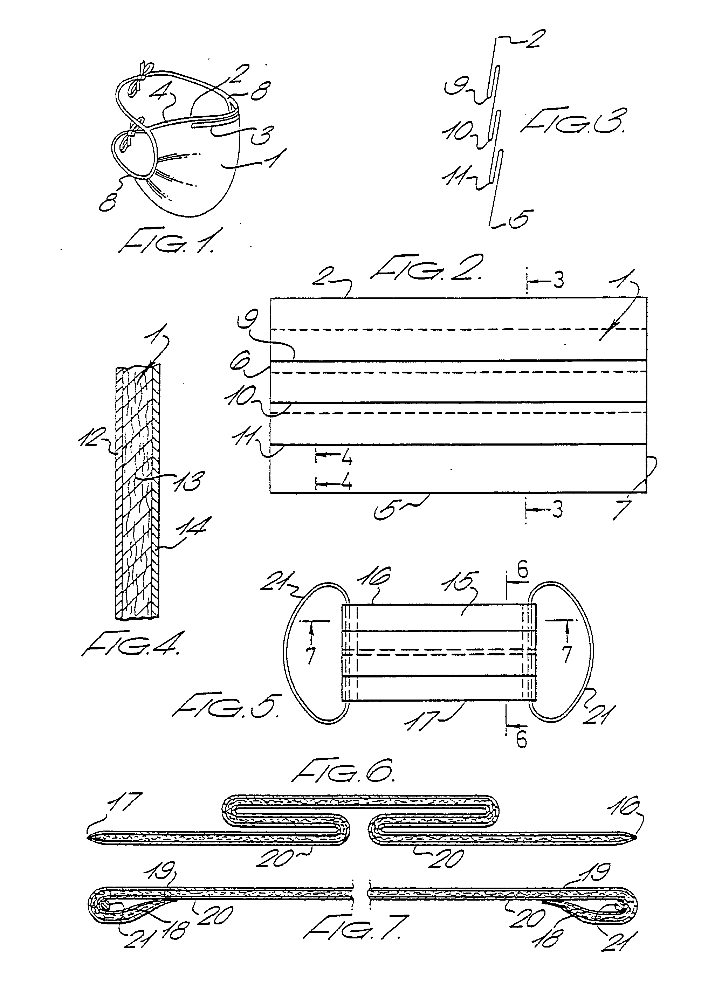

Referring to Figures 1 to 4 of the accompanying drawings, the disposable surgical face mask, as it appears in use, consists of a main body 1 to which is attached at the upper edge 2, a metal nose clip 3. The metal nose clip 3 is made from a metal which can be easily bent to conform to the nose of the wearer, such as aluminium. The mask has attached to the main body 1, by sewing, heat sealing, adhesive, or other suitable means, a seam binding 4 on the upper and lower edges 2, 5 of the mask. There is also attached to the main body 1 of the mask on the side edges 6, 7 of the mask, an additional seam binding 8 which is of sufficient length to extend beyond the top and bottom edges 2, 5 of the mask and is employed as the tie string to affix the mask to the head of the wearer.

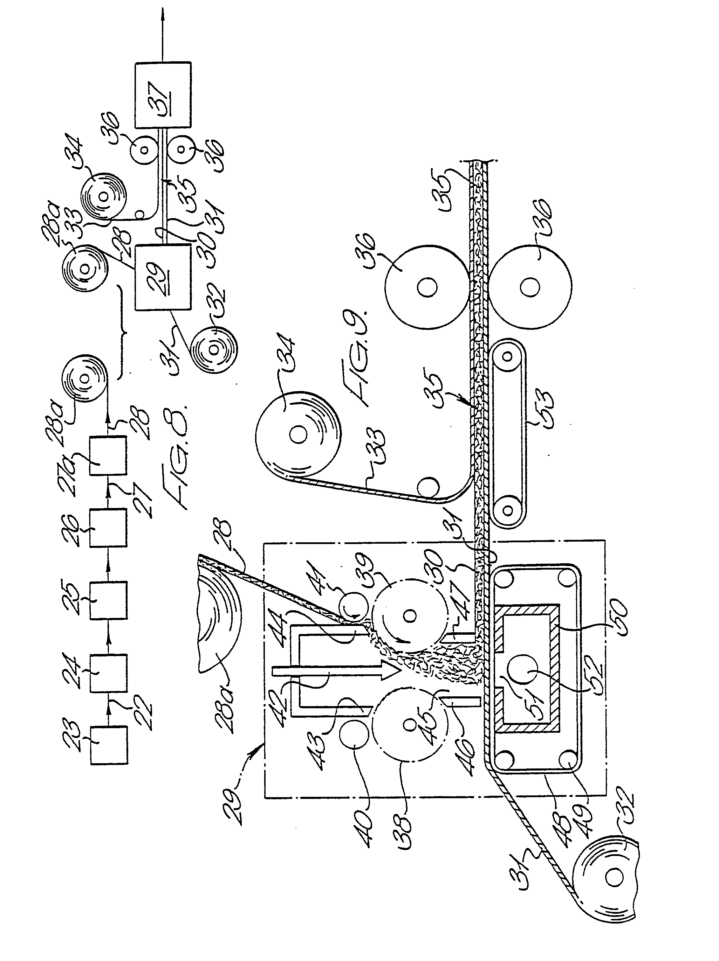

Figures 2 and 3 show the configuration of pleats of the mask. The main body 1 of the mask is folded on itself in an accordion shape from the top edge 2 of the mask to the bottom edge 5 of the mask. The mask is shown to be pleated in three places at 9, 10 and 11, but other pleating arrangements or numbers of pleats may be used. This configuration of the mask has been found to provide excellent conformability to the face of the user.

As seen in Figure 4, the main body 1 of the mask is constituted by a 3-ply laminate. The outer ply 12 of the laminate is a highly porous nonwoven fabric. The centre ply 13 constitutes the filter medium, and comprises an unbonded web of fibrillated interconnected electret fibers, said web having a weight from 6 to 50 g/m$^2$, and said fibers having an average width of more than 10 micrometers. The inner ply 14 is a face-contacting web of highly porous nonwoven fabric.

Both plies 12 and 14 may be constructed of the same highly porous nonwoven fabric. The purpose of the inner and outer plies of the laminate is to contain and retain the filter medium. The plies are a highly porous nonwoven fabric of relatively light weight and contribute very little, if any, filtration properties to the mask construction. Being highly porous, these materials also offer very little resistance to the flow of air through the mask. The weight of the inner and outer plies of the laminate may be between about 13 and 35 g/m$^2$. It is advantageous to use extremely light-weight webs so as not to increase the stiffness and thereby reduce the conformability of the face mask. The plies can each be a carded nonwoven fabric bonded with a thermoplastic binder. A suitable thermoplastic binder is an emulsion polymerized self-curing acrylic binder.

The filter medium may be produced by the method and apparatus described hereinafter with reference to Figures 8 and 9. The web of electret fibers preferably has a weight from 20 to 35 g/m$^2$, e.g. about 25 g/m$^2$. The fibrillated fibers are substantially rectangular in section, and may for example have a depth of about 10 micrometers (corresponding to the thickness of the stretched plastics film from which they are made) and an average width of about 40 micrometers, individual fibers having a width varying from at least 10 micrometers to about 100 micrometers (1 micrometer=$1\times10^{-6}$m). Depending upon the manner in which the web is made, the fibers may be about 5 cm in length, or may be continuous. In both cases they may extend substantially longitudinally of the web, i.e. from side edge to side edge in the mask. The webs have high bacterial filtration efficiency and very low air resistance.

A further disposable surgical face mask in accordance with the present invention is shown in Figures 5 to 7. This mask employs as the body portion 15, a 3-ply laminate as described above with reference to Figures 1 to 4, but is constructed in a different manner.

The body portion 15 is pleated as shown to allow expansion of the body portion over the face and mouth of the wearer. The top and bottom edges 16 and 17 respectively are heat-sealed or adhesive-bonded, and side portions 18 are folded and heat sealed or adhesive-bonded at 19 to the face-contacting ply 20 as shown in Figure 7 to retain elasticated or elastic bands 21 for looping over the ears of the wearer.

One method of producing the laminate constituting the body portion of the face masks shown in Figures 1 to 4, and Figures 5 to 7, respectively, will now be described with reference to Figure 8.

A web 22 of plastics film, preferably polypropylene film, but alternatively of polytetrafluoroethylene or other suitable plastics material, is extruded from extruder 23, advanced to stretching apparatus 24 in which the film is stretched uniaxially in the machine direction, advanced to corona charger 25 where the web is charged on both surfaces, and advanced to fibrillator 26 which splits the web into a web 27 of unbonded fibrillated interconnected electret fibers. The fibrillator 26 is operated in such a way that the fibrillated fibers have an average width of at least 10 micrometers, and extend substantially longitudinally of the web.

For further details of this sequence of steps and the apparatus employed, reference is made to GB—A—1,469,740, the contents of which are incorporated herein by reference.

Fibrillated film web 27 is then processed as by cutting into lengths and air-laying followed by needle-punching in unit 27a, into a randomly-oriented bonded fibrous web 28 having a weight in the range of about 150 g/m² to about 250 g/m², which is wound up into a roll 28a.

The web 28 is far too bulky, heavy, and uncomfortable to be used as a filter in a disposable surgical face mask. Accordingly it is fed from roll 28a to a dual-rotor machine 29 described hereinafter with reference to Figure 9. In the dual-rotor machine 29, web 28 is reconstituted by air-laying into a web 30 of unbonded fibrillated interconnected electret fibers having a weight from 6 to 50 g/m². A web of such a weight, hereinafter referred to as a filter web, is conformable to the face, pliable, and comfortable to wear because of its low weight and very low air resistance.

The filter web 30 is laid, in dual rotor machine 29, into a support or carrier web 31 of nonwoven fabric, e.g. "MASSLINN" nonwoven fabric weighing about 13 to 35 g/m², e.g. 18 to 24 g/m², advanced from a roll 32 thereof. Immediately after leaving machine 29, a similar web 33 of nonwoven fabric advanced from roll 34 thereof is laid upon the two-ply web comprising filter web 30 supported by web 31 to produce a three-ply laminar web 35.

The web 35 may then be passed between calendering rolls 36 heated to a temperature of about 95°C to assist in compacting and bonding the web 35. Other compressing and heating means may be employed if desired.

The laminar web 35, after leaving calendering rolls 36, is then processed into disposable surgical face masks in unit 37. The web 35 may be processed into the masks by applying tapes to the longitudinal edges of the laminar web, pleating the laminar web, applying spaced nose clips to the pleated web, and cutting the web transversely into individual body portions (mask blanks). The tie strings are then applied to the mask blanks to complete production of the masks, as shown in Figures 1 to 4.

Alternatively, the web 35 is pleated, heat sealed or adhesive-bonded at opposite longitudinal edges, cut transversely into individual mask blanks, then the lateral edges of the blanks are folded inwardly and heat-sealed or adhesive-bonded to retain elastic or elasticated bands in order to produce a mask as shown in Figures 5 to 7.

The dual rotor machine 39 is shown in more detail in Figure 9, and is constructed and arranged to operate as described with reference to Figures 13 to 19 of GB—A—1,375,584, the contents of which are incorporated herein by reference. The machine comprises two saw-tooth wire wound lickerins 38 and 39, associated feed rollers 40 and 41, adjustable baffle 42, nose bars 43 and 44, and casting chamber 45 defined between doctor blades 46 and 47. An endless mesh screen conveyor 48 directed over pulleys 49 and driven by drive means (not shown) in a clockwise direction slides over a housing 50 containing an aperture 51 through which air is sucked into a conduit 52 leading to a suction fan (not shown).

In the method described above with reference to Figure 9, only the right-hand side of the machine is operated, i.e. only lickerin 39 is rotated, at high speed. The web 28 is fed in over feed roller 41 onto lickerin 39 which breaks up the web 28 to release the fibrillated fibers. After passing nose bar 44 the fibers enter casting chamber 45 through which high velocity air is drawn by the suction fan. The air stream strips from lickerin 39 fibers which are carried by the air stream past doctor blade 47 and deposited on web 31, advanced from roll 32 and itself supported on screen conveyor 48, to form filter web 30. From screen conveyor 48, webs 30 and 31 are doffed onto a take-away endless belt conveyor 53 driven in a clockwise direction. Web 33, advanced from roll 34, is laid upon the two-ply web immediately after it leaves machine 29 to provide three-ply web 35. Web 35 may be forwarded to calendering rolls 36 by conveyor 53.

The weight per unit area of the web 35 can be varied by varying the speed of the feed roller 41 of the dual rotor machine 29 in relation to the speed of the conveyor 48.

Example

Disposable surgical face masks were produced using the apparatus described above, and webs of the following non-woven fabrics. As web 28, a 150 g/m² web of needle-punched fibrillated polypropylene electret fibers obtained commercially from N. V. Verto, Netherlands, was employed. As webs 31 and 33, 20 g/m² webs of commercially available Chisso bonded rayon nonwoven fabric were employed.

Dual rotor machine 29 was operated to produce from web 28 a random web 30 of 25 g/m² under the following conditions.

| Air-flow | : | 198 m³/min (7000 ft³/min) |
|---|---|---|
| Diameter of feed-roller | : | 8.9 cm (3.5 inch) |
| Diameter of lickerin | : | 22.9 cm (9.0 inch) |
| Gap between feed-roller and nose-bar | : | 0.013 cm (0.005 inch) |
| Gap between lickerin and nose-bar | : | 0.038 cm (0.015 inch) |
| Gap between lickerin and doctor blade | : | 0.03 to 0.038 cm (0.012 to 0.015 inch) |
| Suction fan | : | 5.08 cm (2 inch) mercury |
| Speed of carrier web 31 in relation to feed roller | : | ×5 |
| Temperature of calendering rolls | : | 95°C |

The three-ply laminar web produced was processed into disposable surgical face masks as described above with reference to Figures 1 to 4 and 5 to 7.

The air resistance of the two examples of disposable surgical face mask was determined by passing air at a flow rate of 85 litres per minute through 115 cm² (17.8 inch²) of a mask. The pressure drop, in mm of water, between the upstream and downstream sides of the test mask is a measure of the air resistance of the mask. The air resistance of the mask was found to be negligible, i.e. a back pressure of less than 1 mm of water as compared with about 7 mm of water for conventional surgical face masks.

The bacterial filtration efficiency (BFE) of the masks was determined to be extremely high.

**Claims**

1. A disposable surgical face mask having a body portion (1) adapted to cover the nose and mouth and having means (3, 8) to secure said body portion (1) over the nose and mouth, characterised in that, said body portion (1) comprises as the filter medium (13), a web comprising fibrillated electret fibers, said web having a weight from 6 to 50 g/m², and said fibers having an average width of at least 10 micrometers.

2. A mask according to claim 1 wherein said web (13) has a weight from 20 to 35 g/m².

3. A mask according to claim 1 or claim 2 wherein said fibrillated electret fibers are fibrillated polypropylene electret fibers.

4. A mask according to any one of claims 1 to 3 wherein said web (13) consists only of said fibrillated electret fibers.

5. A mask according to any one of claims 1 to 4 wherein said body (1) portion further comprises support means (1, 2, 14) for the filter medium (13).

6. A mask according to claim 5, wherein said support means comprises two webs (12, 14) of nonwoven fabric retaining said filter medium (13) therebetween.

7. A mask according to any one of claims 1 to 6 wherein said body portion (1) is pleated (9, 10, 11).

8. A method, for producing a disposable surgical face mask according to claim 1, including the step of providing a filter medium (13) by laying one or more webs comprising fibrillated electret fibers or fibrillated electret-precursor fibers, said web or webs having a total weight from 6 to 50 g/m² and the fibrillated fibers having an average width of at least 10 micrometers.

9. A method according to claim 8 wherein said one or more webs (13) comprising fibrillated electret fibers or fibrillated electret-precursor fibers are laid on a first web (12) of nonwoven fabric, and a second web (14) of nonwoven fabric is laid on said one or more webs (13) of fibrillated fibers, and the formed laminar web is processed into said mask.

10. A method according to claim 8 or claim 9 wherein said web or webs (13) of fibrillated fibers are air-laid.

**Patentansprüche**

1. Eine chirurgische Wegwerf-Gesichtsmaske mit einem Hauptteil, der die Nase und den Mund bedecken soll, und mit Einrichtungen (3, 8) zum Befestigen des genannten Hauptteiles (1) über der Nase und dem Mund, dadurch gekennzeichnet, daß der genannte Hauptteil (1) als Filtermedium (13) eine Bahn mit einem Gehalt an fibrillierten Electret-Fasern umfaßt, wobei die genannte Bahn ein Gewicht von 6 bis 50 g/m² aufweist, und daß die genannten Fasern eine durchschnittliche Weite von wenigstens 10 Mikrometer aufweisen.

2. Eine Maske nach Anspruch 1, worin die genannte Bahn (13) ein Gewicht von 20 bis 35 g/m² aufweist.

3. Eine Maske nach Anspruch 1 oder Anspruch 2, worin die genannten fibrillierten Electret-Fasern fibrillierte Polypropylen-Electret-Fasern sind.

4. Eine Maske nach einem der Ansprüche 1 bis 3, worin die genannte Bahn (13) nur aus den genannten fibrillierten Electret-Fasern besteht.

5. Eine Maske nach einem der Ansprüche 1 bis 4, worin der genannte Hauptteil (1) weiterhin Stützeinrichtungen (12, 14) für das Filtermedium (13) umfaßt.

6. Eine Maske nach Anspruch 5, worin die genannten Stützeinrichtungen zwei Bahnen (12, 14) aus einem Faservliesstoff umfassen, welche Bahnen das genannte Filtermedium (13) zwischen denselben festhalten.

7. Ein Maske nach einem der Ansprüche 1 bis 6, worin der genannte Hauptteil (1) gefaltet ist (9, 10, 11).

8. Ein Verfahren zur Herstellung einer chirurgischen Wegwerf-Gesichtsmaske nach Anspruch 1, umfassend die Stufe der Schaffung eines Filtermediums (13) durch Ablegen von einer oder mehreren Bahnen, welche fibrillierte Electret-Fasern oder Vorläufer von fibrillierten Electret-Fasern enthalten, wobei die genannte Bahn oder die genannten Bahnen ein Gesamtgewicht von 6 bis 50 g/m² aufweisen und wobei die fibrillierten Fasern eine durchschnittliche Weite von wenigstens 10 Mikrometer haben.

9. Ein Verfahren nach Anspruch 8, bei welchem die genannte Bahn (13) oder die genannten mehreren Bahnen (13) mit einem Gehalt an fibrillierten Electret-Fasern oder Vorläufern von fibrillierten Electret-Fasern auf eine erste Bahn (12) aus einem Faservliesstoff aufgelegt wird bzw. werden und bei welchem eine zweite Bahn (14) aus einem Faservliesstoff auf die genannte Bahn (13) bzw. auf die genannten mehreren Bahnen (13) aus fibrillierten Fasern aufgelegt wird und die so gebildete, mehrschichtige Bahn zu der genannten Maske verarbeitet wird.

10. Ein Verfahren nach Anspruch 8 oder Anspruch 9, bei welchem die genannte Bahn (13) oder die genannten Bahnen (13) aus fibrillierten Faser in einem Luftstrom abgelegt werden.

**Revendications**

1. Un masque facial chirurgical jetable comportant un corps (1) adapté pour recouvrir le nez et la bouche et comportant des moyens (3, 8) pour fixer ledit corps (1) sur le nez et la bouche, caractérisé en ce que le corps (1) comprend comme agent de filtrage (13) une nappe comportant des fibres à électrets fibrillées, ladite nappe ayant un poids compris entre 6 et 50 g/m², et lesdites fibres ayant une largeur moyenne d'au moins 10 micromètres.

2. Un masque selon la revendication 1, dans lequel ladite nappe (13) a un poids compris entre 20 et 35 g/m².

3. Un masque selon la revendication 1 ou la revendication 2, dans lequel lesdites fibres à électrets fibrillées sont des fibres à électrets fibrillées en polypropylène.

4. Un masque selon une quelconque des revendications 1 à 3, dans lequel ladite nappe (13) se compose seulement desdites fibres à électrets fibrillées.

5. Un masque selon une quelconque des revendications 1 à 4, dans lequel ledit corps (1) comprend en outre des moyens de support (1, 2, 14) pour l'agent de filtrage (13).

6. Un masque selon la revendication 5, caractérisé en ce que lesdits moyens de support comprennent deux nappes (12, 14) de tissu non tissé retenant entre elles ledit agent de filtrage (13).

7. Un masque selon une quelconque des revendications 1 à 6, dans lequel ledit corps (1) est plissé (9, 10, 11).

8. Un procédé pour produire un masque facial chirurgical jetable conforme à la revendication 1, comprenant l'étape consistant à former un agent de filtrage (13) par utilisation d'une ou plusieurs nappes comprenant des fibres à électrets fibrillées ou des fibres à précurseurs d'électrets fibrillées, la ou lesdites nappes ayant un poids' total de 6 à 50 g/m² et les fibres fibrillées ayant une largeur moyenne d'au moins 10 micromètres.

9. Un procédé selon la revendication 8, dans lequel la ou lesdites nappes (13) comprenant des fibres à électrets fibrillées ou des fibres à précurseurs d'électrets fibrillées sont placées sur une première nappe (12) de tissu non tissé, et une seconde nappe (14) de tissu non tissé est déposée sur la ou lesdites nappes (13) de fibres fibrillées, et la nappe stratifiée réalisée est mise en oeuvre pour former ledit masque.

10. Un procédé selon la revendication 8 ou la revendication 9, dans lequel la ou lesdites nappes (13) de fibres fibrillées sont déposées pneumatiquement.

FIG.1.

FIG.3.

FIG.2.

FIG.4.

FIG.5.

FIG.6.

FIG.7.

FIG.8.

FIG.9.